# EUROPEAN PATENT SPECIFICATION

(11) **EP 1 495 597 B1**
(45) Date of publication and mention of the grant of the patent: **07.05.2008**
(21) Application number: 03719280.4
(22) Date of filing: 11.04.2003
(51) Int. Cl.: H04L 12/56

(54) **ARRANGEMENT FOR ADAPTIVE RATE CONTROL**
ANORDNUNG ZUR ADAPTIVEN RATESTEUERUNG
SYSTEME DE COMMANDE DE VITESSE ADAPTATIVE

(30) Priority: 18.04.2002 SE 0201172
(43) Date of publication of application: 12.01.2005
(73) Proprietor: Terraplay Systems AB, 171 54 Solna (SE)
(72) Inventor: KARLSSON, Roland, S-117 21 Stockholm (SE); JÄNDEL, Magnus, S-194 68 Upplands Vàsby (SE)
(74) Representative: Herbjörnsen, Rut
(86) International application number: PCT/SE2003/000587
(87) International publication number: WO 2003/088602

(56) References cited:
- US-A- 5 892 754
- 'TERRAPLAY: introduction to the terraplay system' VERSION 2.0, [Online] 12 June 2001, pages 2 - 12, XP002966601 Retrieved from the Internet: <URL:www.terraplay.com/sdk20/TP_D_0004_intr o.doc>

## Description

### Technical Field

The present invention relates to an arrangement for adaptive control of the transmission in a packet data network, as defined in the preamble of claim 1. The invention also relates to computer program products for adaptive control of the transmission rate in a packet data network, as defined in claims 9 and 11.

### Background

In packet data networks, a sender transmits digital packet data to one or more receivers through a network. The network may be, for example, an internet, following the Internet Protocol (IP) standard, and comprising IP routers and switches connected by digital communication links. The sender and the receiver are connected to the network by means of wireless or wireline access links using, for example, Asymmetric Digital Subscriber Line (ADSL), Public Switched Telephone Network (PSTN) modems, cable modems, General Packet Radio System (GPRS), Universal Mobile Telecommunication System (UMTS) or Edge access technologies. Communication protocols used include reliable protocols such as Transport Control Protocol (TCP) or unreliable protocols such as User Datagram Protocol (UDP).

The access links and network enabling a sender to send data to a receiver is referred to as a channel in this document. The access links and network enabling the receiver to send data, such as acknowledgement of received data, to the sender is called a back-channel.

The channel and the back-channel have limited bandwidth and may suffer from latency and packet loss. The amount of latency and packet loss depends on the network and the access technologies used and may be time-dependent. Latency is caused, for example, by buffering and congestion and packet loss may be caused, for example, by bit errors on access links or overflowing buffers in routers.

The sender could send several classes of application data to the receiver. These data classes may be, for example video, audio and text data in a media streaming application or different layers of layered video codec in a scaleable video conferencing application. In a multiplayer game data descriptions of properties of different objects in the game could be different data classes.

The users may wish to communicate different application data classes with different priorities in case of bandwidth limitations, delays or congestion in the channel. In a media streaming application the users may wish to give audio priority over video. In a scaleable video conferencing application the users may wish to give the basic layer priority over enhancement layers. In a multiplayer game users may wish to give focus objects priority over peripheral objects.

To minimize the impact of limited bandwidth, congestion, latency and packet loss on the end-user experience of the application, it is beneficial to apply rate control that is adapted to the requirements or priorities of each application. Rate control means that the sender sends data in order of priority and regulates the rate so that the available bandwidth is used while avoiding sending too much. Sending more data than the channel can handle causes high latency or high packet loss. The rate control should adapt to variations in the properties of the channel, such as variations in the available bandwidth. Such rate control that respects application priorities and adapts to variations in the properties of the channel is here called Adaptive Rate Control (ARC). TCP and Differentiated Services provides some of these functions, but not all. For example, TCP does not prioritize between different classes of application data. Differentiated services do not adapt to variations in the channel capacity.

It is difficult to specify one single algorithm or method for ARC that works well in all communication systems. Different channels behave differently. As an example, consider how communication latency depends on the data rate. In some channels (for example a congested PSTN modem link) the latency is reduced if the data rate is reduced. In a different channel (for example a GPRS link) the latency may be reduced in some situations if the data rate is increased. Also, GPRS performance differs between different implementations and versions Different applications may also have different requirements. For example, a video streaming application accepts latency but requires high throughput, whereas a real-time multiplayer game might accept low throughput but requires low latency on at least the most important objects.

The proliferation of networks, access links, applications and user preferences makes it virtually impossible to design one single ARC method that works optimally under all conditions. One solution would be to implement one solution for each channel/application combination. This would be a cumbersome and expensive solution, which would increase the cost of application development and of communication systems.
A conventional flow control system is disclosed in US-A-5892754.

### Object of the Invention

It is an object of the present invention to enable ARC in a packet switched network, the ARC also being adapted to the requirements of a specific application.

### Summary of the Invention

This object is achieved according to the invention by an arrangement for adaptive rate control of a connection between a sender and a receiver in a packet switched data network, said arrangement comprising
A generic control means for performing adaptive rate control according to a generic algorithm, said arrangement being characterized by
At least one application specific control means, said application-specific control means being arranged to control the function of the generic control means in dependence of the characteristics of the application.

The invention, therefore, enables application-specific control without the need to provide a complete control means for each application. Instead, a generic control means is provided, which can be controlled by different application-specific control means to adapt to the needs of different applications.

The object is also achieved by computer program product for adaptive rate control in a packet data network, said product comprising computer readable code means which, when run on a computer is arranged to receive from an application-specific control means at least one configuration parameter in order to control the function of the computer program product.

This computer program product is comprised in the generic control means above.

The object is also achieved by computer program product for adaptive rate control in a packet data network, said product comprising computer readable code means which, when run on a computer causes the computer to provide at least one configuration parameter to a generic control means for adaptive rate control, in order to control the adaptive rate control provided by the generic control means.

This computer program product is comprised in the application-specific control means above.

Preferably, the generic control means is controlled by at least one configuration parameter and said application-specific control means is arranged to provide the at least one configuration parameter to the generic control means for controlling the function of the generic control means.

The generic control means may also be arranged to monitor the quality of the rate control and output a set of quality data indicative of such quality. The set of quality data typically includes measurements of latency and/or packet loss. The set of quality data is preferably provided to the application-specific control means and used by the application-specific control means to set the at least one configuration parameter.

In a preferred embodiment, the generic control means is implemented in at least one network server and in low-level client software, and the application-specific control means is implemented as an application-level software module.

The application-specific control means may be made dependent on the type of channel used for the connection.

The arrangement according to the invention enables the adaptive rate control to be set individually for each application. It may also be adapted to the type of channel used. It therefore solves the problem of providing a generic implementation in network servers and in low-level client software while at the same time providing for adaptation to the abundance of channel types and applications with very different behaviour and requirements. The invention is based on the recognition of the fact that at least a part of the ARC must be implemented in low-level software such as communication protocol stacks.

With the arrangement and computer programs according to the invention, it is possible to adapt to different user preferences, application types and different channel behaviour without changing communication protocols, server side functions or low-level protocol functions on the client side. All specific adaptation occurs in high-level software, preferably on the client side.

### Brief Description of the Drawings

The present invention will be described in more detail in the following, with reference to the appended drawings, in which:
Figure 1 illustrates the context in which the invention is used;
Figure 2 illustrates the inventive division of the control functions in a generic and a specific part;
Figure 3 illustrates an embodiment of the inventive adaptive rate control arrangement

### Detailed Description of Embodiments

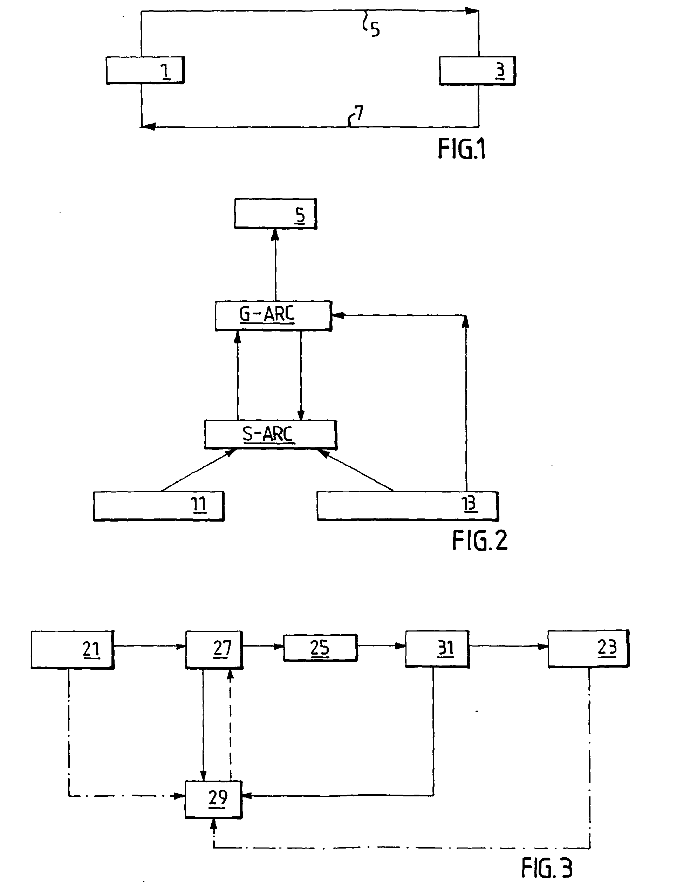

Figure 1 illustrates, very simplified, the technical context of the invention. A sender, for example, a client terminal, 1 transmits data to a receiver 3 through a channel 5. The receiver may be, for example, a network server. The channel 5 constituting the access links and network enabling the sender 1 to send data to the receiver. Typically, each ARC sender/receiver pair will set up a communication link serving as a back-channel 7 for the ARC sender-receiver pair that forms the communication link in the opposite direction. The access links and network enabling the receiver to send data, such as acknowledgement of received data, to the sender is called a back-channel 7.

Figure 2 provides a logical view of the invention showing the logical units and the exchange of control data. The logical functions Application, G-ARC and S-ARC may be distributed between the sending and the receiving units in many different ways. The arrangement for adaptive rate control comprises a generic part G-ARC and an application-specific part S-ARC. The generic part G-ARC controls the function of the channel 5. G-ARC performs rate control according to a generic algorithm. The generic algorithm may be based on any adaptive rate control algorithm for example, the leaky bucket algorithm. The behaviour of the generic algorithm is controlled by a set of ARC configuration parameters. S-ARC controls G-ARC by setting the ARC configuration parameters. This control algorithm can be specific for the user preferences, the application type and the channel.

The application-specific part S-ARC may also communicate with an application 11 and a managing unit 13. The application provides instructions to the application-specific part S-ARC thus indirectly controlling the function of the adaptive rate control.

Although Figure 2 only shows one, several application-specific parts S-ARC may exist on the same level, each adapted to, and controlled by, one or more applications The sender algorithm and the receiver algorithm are controlled by the ARC configuration parameters, which may include, for example, the recommended bandwidth of the output stream of datagrams from the sender side.

Typically, the generic control means G-ARC receives ARC configuration parameters from one of the application-specific control means. Alternatively the generic control means may include hard-wired default values of the ARC configuration parameters. It may also receive default values of the ARC configuration parameters from the managing unit 13 before the communication session is started.

G-ARC monitors the quality of the rate control and outputs a set of data that shows how well the rate is controlled. This set of data is called ARC statistics and may include, for example, measurements of latency and packet loss. The application-specific part S-ARC receives ARC statistics from G-ARC. The generic part G-ARC may also perform quality analysis regarding the function of the adaptive rate control. The result of this analysis may be transmitted to the application-specific part as quality data. This quality data, that is, ARC statistics, may be sent to the application-specific part, which will in this case determine how the rate control should be affected.

The discussions of the different units in Figure 2 also apply to Figure 3, and vice versa.

Figure 3 shows a system according to the invention wherein a sender communicates with a receiver across a channel, as shown in Figure 1. The client includes both an ARC sender and an ARC receiver. The network server includes both an ARC sender and an ARC receiver. Each ARC sender and ARC receiver comprises a generic part and may also comprise an application-specific part. Each ARC sender communicates with the corresponding ARC receiver across the channel. Typically, each ARC sender-receiver pair will set up a communication link that serves as a back-channel (not shown in Figure 3) for the ARC sender-receiver pair that forms the communication link in the opposite direction. The back-channel will be used for communicating data such as acknowledgements and quality data. Figure 3 only shows one sender-receiver pair.

Figure 3 shows the detailed structure of an ARC sender/receiver pair. In this Figure a sending application 21 transmits data to a receiving application 23 through a channel 25. It is assumed that the sender side has a sender generic control means 27 and an application-specific control means 29, while the receiver side has a receiver generic control means 31. The sender generic control means 27 performs the generic part of the ARC algorithm at the sender side and the receiver generic control means 31 performs the generic part of the ARC algorithm at the receiver side.

In Figure 3 the application-specific control means 29 is located at the sender side, but the following four configurations are possible:
The sender side has an application-specific control means that controls both generic control means 27, 31. The receiver side does not have application-specific control means.
The receiver side has an application-specific control means that controls both generic control means 27, 31. The sender side does not have application-specific control means.
The sender and the receiver side each has an application-specific control means that share the control of both generic control means 27, 31.
No application-specific part is included in either the sender or the receiver side. This is a special case where no application-specific control is used. This is the case, for example for TCP communication.

On the sender side the generic control means 27 receives an input stream of datagrams from the application that uses the adaptive rate control. Each datagram may carry a tag that shows how it should be handled. The tag may include a priority level and/or an indicator showing if the datagram should be sent reliably or unreliably.

The sender generic control means 27 processes the stream of datagrams according to the algorithm provided for the sender generic control means 27 and produces an output stream of datagrams that is sent to the receiver generic control means 31. The output stream of datagrams is adapted to the capabilities of the channel, the priority of each datagram and the reliable/unreliable status of each datagram. Communication protocol stacks often include designs where datagrams belonging to a lower protocol level are transmitted as payload in datagrams belonging to a higher protocol level. Sending several datagrams as payload in a higher-level datagram is called aggregation of datagrams. Aggregating many datagrams in one big datagram will give a high throughput but also a high latency. The G-ARC sender could optionally control aggregation to find the right balance between throughput and latency.

If the input stream of datagrams is too fast, the sender generic control means will drop the lowest priority unreliable datagrams and output a stream of datagrams that can be communicated across the channel without causing congestion. The input stream for datagrams may also be reordered so that high-priority datagrams are sent before low-priority datagrams. Reliable datagrams may be resent if they are lost.

The receiver generic control means 31 receives a stream of datagrams from the sender generic control means 27 through the channel 25. The receiver generic control means 31 processes the received datagrams according to the algorithm provided for this function and forwards correctly received datagrams to the application. The receiver generic control means 31 may request resending of missing reliable datagrams.

The application-specific control means 29 is arranged to set certain parameters, called ARC configuration parameters in the generic control means 27, 31 thus determining how the generic control means 27, 31 are to control the rate in dependence of the needs of the application. An example of an ARC configuration parameter is the recommended bandwidth of the output stream of datagrams from the GARC sender. It preferably also receives ARC statistics from the generic control means. It may also receive further parameters and settings from the application. For example, the application may provide application instructions to prioritize high throughput at the price of high latency, or vice versa. The application-specific control means employs an algorithm that should be based on a model of the channel and on understanding of the requirements of the application.

The algorithm in the application-specific control means generating the ARC configuration parameters uses ARC statistics as input. ARC statistics gives full or partial information on how well the communication between the sender and the receiver is going. Typical elements of ARC statistics are:
A measure of packet loss in the channel for all packets, or optionally for each application data class.
A measure of latency in the channel, optionally for each application data class Information on actions performed by the generic control means algorithm such as partial or complete dropping of packets in certain application data classes.

To illustrate the advantages of the invention, consider a situation where an application service provider wishes to deliver the same service to customers of many different GPRS operators. The properties of different GPRS networks are very different. The application service provider delivers the same system including application servers and client software to all GPRS operators. This system includes the generic rate control means G-ARC. Different versions of the application-specific control means S-ARC can then be downloaded as Java programs by the end-users. Each user gets a version of S-ARC that is appropriate for the specific properties of the local GPRS service.

Further, consider a situation where several game developers deliver games to a 3G wireless operator. Different game genres require different ARC solutions. A turn-based massive multiplayer game requires high and reliable throughput, while a fighting game requires low latency. The operator wishes to avoid any involvement in game specific details. G-ARC is implemented in the operator's network and in the wireless terminals. Each game developer writes an S-ARC module that tailors ARC to perform optimally for the specific game.

A third example would be a popular multimedia chat application attracting billions of users. Operators and network equipment providers want to gain a competitive edge by showing that the popular chat application performs best in their network. An operator or network equipment provider could use detailed knowledge of how their network is built to write an S-ARC optimizing the performance of the chat application in their specific network. The S-ARC could then be distributed to the operator's customer.

## Claims

1. An arrangement for adaptive rate control of when packets are to be transmitted in a connection between a sender and a receiver in a packet switched data network, said arrangement comprising
generic control means (G-ARC; 27, 31) arranged in the sender and the receiver, for performing adaptive rate control according to a generic algorithm and at least one application specific control means (S-ARC; 29) to control the function of the generic control means (G-ARC; 27, 31) in dependence of the characteristics of the application, said arrangement being **characterized in that** the application-specific control means (S-ARC; 29) is arranged in the receiver to enable application specific control of the communication performed on the receiver side.

2. An arrangement according to claim 1, wherein the generic control means (G-ARC; 27, 31) is controlled by at least one configuration parameter and said application-specific control means (S-ARC; 29) is arranged to provide the at least one configuration parameter to the generic control means for controlling the function of the generic control means.

3. An arrangement according to claim 1 or 2 wherein the generic control means (G-ARC; 27, 31) is arranged to monitor the quality of the rate control and output a set of quality data indicative of such quality.

4. An arrangement according to claim 3, wherein the set of quality data includes measurements of latency and/or packet loss.

5. An arrangement according to any one of the preceding claims, wherein the set of quality data is provided to the application-specific control means (S-ARC; 29) and used by the application-specific control means (S-ARC; 29) to set the at least one configuration parameter.

6. An arrangement according to any one of the preceding claims, wherein the generic control means (G-ARC; 27,31) is implemented in at least one network server and in low-level client software.

7. An arrangement according to any one of the preceding claims, wherein the application-specific control means (S-ARC; 29) is implemented as an application-level software module.

8. An arrangement according to any one of the preceding claims, wherein the application-specific control means (S-ARC; 29) is dependent on the type of channel (5) used for the connection.

9. A computer program product intended for use in a receiver of communication in a packet-based data network, for adaptive rate control performed at the receiving side in a packet data network, said product comprising computer readable code means which, when run on a computer causes the computer to provide at least one configuration parameter to a generic control means for adaptive rate control, in order to control the adaptive rate control provided by the generic control means.

10. A computer program product according to claim 9, wherein the ARC statistics data includes measurements of latency and/or packet loss.

11. A computer program product intended for use in a receiver of communication in a packet-based data network, for adaptive rate control performed at the receiving side in a packet data network, said product comprising computer readable code means which, when run on a computer is arranged to receive from an application-specific control means at least one configuration parameter in order to control the function of the computer program product.

12. A computer program product according to claim 11, further arranged to monitor the quality of the rate control and output a set of quality data indicative of this quality.

13. A computer program product according to claim 11 or 12, further arranged to transmit said quality data to the application-specific control means.

## Patentansprüche

1. Anordnung zur adaptiven Ratensteuerung, wenn Pakete in einer Verbindung zwischen einem Sender und einem Empfänger in einem paketvermittelten Datennetz zu übertragen sind, aufweisend:
eine generische Steuereinrichtung (G-ARC; 27, 31), die in dem Sender und dem Empfänger angeordnet ist, zum Ausführen einer adaptiven Ratensteuerung entsprechend einem generischen Algorithmus und mindestens eine anwendungsspezifische Steuereinrichtung (S-ARC; 29) zum Steuern der Funktion der generischen Steuereinrichtung (G-ARC; 27, 31), abhängig von den Eigenschaften der Anwendung,
**dadurch gekennzeichnet, dass**
die anwendungsspezifische Steuereinrichtung (S-ARC; 29) in dem Empfänger angeordnet ist, um eine anwendungsspezifische Steuerung der auf der Empfängerseite ausgeführten Kommunikation zu ermöglichen.

2. Anordnung nach Anspruch 1, wobei die generische Steuereinrichtung (G-ARC; 27, 31) durch mindestens einen Konfigurationsparameter gesteuert wird und die anwendungsspezifische Steuereinrichtung (S-ARC; 29) dafür eingerichtet ist, den mindestens einen Konfigurationsparameter der generischen Steuereinrichtung zuzuführen, um die Funktion der generischen Steuereinrichtung zu steuern.

3. Anordnung nach Anspruch 1 oder 2, wobei die generische Steuereinrichtung (G-ARC; 27, 31) eingerichtet ist, um die Qualität der Ratensteuerung zu überwachen und einen Satz von Qualitätsdaten, die eine solche Qualität angeben, auszugeben.

4. Anordnung nach Anspruch 3, wobei der Satz von Qualitätsdaten Latenz- und/oder Paketverlustmessungen aufweist.

5. Anordnung nach einem der vorhergehenden Ansprüche,
wobei der Satz von Qualitätsdaten der anwendungsspezifischen Steuereinrichtung (S-ARC; 29) bereitgestellt wird und von der anwendungsspezifischen Steuereinrichtung (S-ARC; 29) verwendet wird, um den mindestens einen Konfigurationsparameter festzulegen.

6. Anordnung nach einem der vorhergehenden Ansprüche, wobei die generische Steuereinrichtung (G-ARC; 27, 31) in mindestens einem Netzserver und in Client-Software niedriger Ebene implementiert ist.

7. Anordnung nach einem der vorhergehenden Ansprüche, wobei die anwendungsspezifische Steuereinrichtung (S-ARC; 29) als ein Softwaremodul auf der Anwendungsebene implementiert ist.

8. Anordnung nach einem der vorhergehenden Ansprüche, wobei die anwendungsspezifische Steuereinrichtung (S-ARC; 29) vom Typ des für die Verbindung verwendeten Kanals (5) abhängt.

9. Computerprogrammprodukt, das dafür vorgesehen ist, in einem Kommunikationsempfänger in einem paketbasierten Datennetz für eine auf der Empfangsseite in einem Paketdatennetz ausgeführte adaptive Ratensteuerung verwendet zu werden, wobei das Produkt ein computerlesbares Codemittel aufweist, welches, wenn es auf einem Computer ausgeführt wird, den Computer veranlasst, einer generischen Steuereinrichtung zur adaptiven Ratensteuerung mindestens einen Konfigurationsparameter bereitzustellen, um die von der generischen Steuereinrichtung bereitgestellte adaptive Ratensteuerung zu steuern.

10. Computerprogrammprodukt nach Anspruch 9, wobei die ARC-Statistikdaten Latenz- und/oder Paketverlustmessungen aufweisen.

11. Computerprogrammprodukt, das dafür vorgesehen ist, in einem Kommunikationsempfänger in einem paketbasierten Datennetz für eine auf der Empfangsseite in einem Paketdatennetz ausgeführte adaptive Ratensteuerung verwendet zu werden, wobei das Produkt ein computerlesbares Codemittel aufweist, welches, wenn es auf einem Computer ausgeführt wird, dafür eingerichtet ist, an einer anwendungsspezifischen Steuereinrichtung mindestens einen Konfigurationsparameter zu empfangen, um die Funktion des Computerprogrammprodukts zu steuern.

12. Computerprogrammprodukt nach Anspruch 11, welches weiter dafür eingerichtet ist, die Qualität der Ratensteuerung zu überwachen und einen Satz von Qualitätsdaten auszugeben, die diese Qualität angeben.

13. Computerprogrammprodukt nach Anspruch 11 oder 12, welches weiter dafür eingerichtet ist, die Qualitätsdaten zur anwendungsspezifischen Steuereinrichtung zu übertragen.

## Revendications

1. Agencement de commande adaptative de débit lorsque des paquets doivent être transmis dans une connexion entre un émetteur et un récepteur dans un réseau de commutation de données par paquets, ledit agencement comprenant :
un moyen de commande générique (G - ARC; 27, 31) agencé dans l'émetteur et le récepteur, pour exécuter une commande adaptative de débit selon un algorithme générique et au moins un moyen de commande à application spécifique (S - ARC ; 29) pour commander la fonction du moyen de commande génériques (G - ARC ; 27, 31) en fonction des caractéristiques de l'application, ledit agencement étant **caractérisé en ce que** le moyen de commande à application spécifique (S - ARC ; 29) est agencé dans le récepteur pour permettre la commande à application spécifique de la communication exécutée du côté du récepteur.

2. Agencement selon la revendication 1, dans lequel le moyen de commande générique (G - ARC; 27, 31) est commandé par au moins un paramètre de configuration et ledit moyen de commande à application spécifique (S - ARC ; 29) est agencé pour fournir l'au moins un paramètre de configuration au moyen de commande générique pour commander la fonction du moyen de commande générique.

3. Agencement selon l'une quelconque des revendications 1 ou 2, dans lequel le moyen de commande générique (G - ARC ; 27, 31) est agencé pour surveiller la qualité de la commande de débit et pour délivrer en sortie un ensemble de données de qualité indicatives d'une telle qualité.

4. Agencement selon la revendication 3, dans lequel l'ensemble de données de qualité inclut des mesures de temps d'attente et / ou de perte de paquets.

5. Agencement selon l'une quelconque des revendications précédentes, dans lequel l'ensemble de données de qualité est fourni au moyen de commande à application spécifique (S - ARC ; 29) et utilisé par le moyen de commande à application spécifique (S - ARC ; 29) pour régler l'au moins un paramètre de configuration.

6. Agencement selon l'une quelconque des revendications précédentes, dans lequel le moyen de commande générique (G - ARC ; 27, 31) est mis en application dans au moins un serveur de réseau et dans un logiciel client de bas niveau.

7. Agencement selon l'une quelconque des revendications précédentes, dans lequel le moyen de commande à application spécifique (S - ARC ; 29) est mis en application sous la forme d'un module logiciel au niveau de l'application.

8. Agencement selon l'une quelconque des revendications précédentes, dans lequel le moyen de commande à application spécifique (S - ARC ; 29) dépend du type de canal (5) utilisé pour la connexion.

9. Logiciel informatique, destiné à être utilisé dans un récepteur de communication dans un réseau de commutation de données par paquets, de commande adaptative de débit exécutée au niveau du côté de la réception dans un réseau de commutation de données par paquets, ledit logiciel comprenant un moyen formant code pouvant être lus par un ordinateur qui, une fois exécuté sur un ordinateur, fait que l'ordinateur fournit au moins un paramètre de configuration au moyen de commande générique de commande adaptative de débit, afin de commander la commande adaptative de débit fournie par le moyen de commande générique.

10. Logiciel informatique selon la revendication 9, dans lequel les données statistiques ARC incluent des mesures de temps d'attente et / ou de perte de paquets.

11. Logiciel informatique, destiné à être utilisé dans un récepteur de communication dans un réseau de commutation de données par paquets, de commande adaptative de débit exécutée au niveau du côté de la réception dans un réseau de commutation de données par paquets, ledit logiciel comprenant un moyen formant code pouvant être lu par un ordinateur qui, une fois exécuté sur un ordinateur, est agencé pour recevoir en provenance du moyen de commande à application spécifique, au moins un paramètre de configuration afin de commander la fonction du logiciel informatique.

12. Logiciel informatique selon la revendication 11, agencé de plus pour surveiller la qualité de la commande de débit et pour délivrer en sortie un ensemble de données de qualité indicatives de cette qualité.

13. Logiciel informatique selon l'une quelconque des revendications 11 ou 12, agencé de plus de manière à transmettre lesdites données de qualité au moyen de commande à application spécifique.
